# EUROPÄISCHE PATENTSCHRIFT

(11) **EP 4 237 709 B1**
(45) Veröffentlichungstag und Bekanntmachung des Hinweises auf die Patenterteilung: **01.10.2025**
(21) Anmeldenummer: 21798346.9
(22) Anmeldetag: 20.10.2021
(51) Int. Cl.: F16J 15/3216, F16J 15/3252, F16J 15/3268, F16J 15/3276

(54) **ANORDNUNG ZUM ABDICHTEN EINER WELLE MITTELS EINES WELLENDICHTRINGS, GETRIEBE MIT EINER ANORDNUNG UND VERFAHREN ZUM HERSTELLEN EINER ANORDNUNG**
ARRANGEMENT FOR SEALING A SHAFT BY MEANS OF A SHAFT SEALING RING, GEAR SYSTEM HAVING AN ARRANGEMENT AND METHOD FOR PRODUCING AN ARRANGEMENT
AGENCEMENT D'ÉTANCHÉITÉ D'UN ARBRE AU MOYEN D'UNE BAGUE D'ÉTANCHÉITÉ D'ARBRE, SYSTÈME D'ENGRENAGE AYANT UN AGENCEMENT ET PROCÉDÉ DE PRODUCTION D'UN AGENCEMENT

(30) Priorität: 02.11.2020 DE 102020006690
(43) Veröffentlichungstag der Anmeldung: 06.09.2023
(73) Patentinhaber: SEW-EURODRIVE GmbH & Co. KG, 76646 Bruchsal (DE)
(72) Erfinder: HÜTTINGER, Alexander, 75245 Neulingen (DE)
(86) Internationale Anmeldenummer: PCT/EP2021/079115
(87) Internationale Veröffentlichungsnummer: WO 2022/090030

(56) Entgegenhaltungen:
- DE-A1- 102013 216 771
- DE-A1- 3 714 674
- DE-A1- 4 434 573
- US-A1- 2014 097 572

## Beschreibung

Die Erfindung betrifft eine Anordnung zum Abdichten einer Welle mittels eines Wellendichtrings, ein Getriebe mit einer Anordnung und ein Verfahren zum Herstellen einer Anordnung.

Es ist allgemein bekannt, dass ein Wellendichtring zum Abdichten eines ölbefüllten Innenraums zur Umgebung hin dient.

**Aus der** DE 10 2013 216 771 A1 **ist ein Radialwellendichtring bekannt.**

**Aus der** DE 20 2018 002 099 U1 **ist eine Dichtung mit Stützkörper für Drehschieberwelle bekannt.**

**Aus der** DE 42 13 996 A1 **ist ein Wellendichtring bekannt.**

**Aus der** US 38 43 139 A **ist eine Öldichtung bekannt.**

**Aus der** US 2014 / 0097572 A1 **ist eine Radialwellendichtanordnung mit einschnappbarem Hilfsteil bekannt.**

**Aus der** DE 44 34 573 A1 **ist ein Radialwellendichtring mit integrierter Druckabstützung bekannt.**

**Aus der** DE 37 14 674 A1 **ist als nächstliegender Stand der Technik ein Bausatz für eine Wellendichtung bekannt.**

**Aus der** DE 44 34 573 A1 **ist ein Radialwellendichtring mit integrierter Druckabstützung bekannt.**

Der Erfindung liegt daher die Aufgabe zugrunde, einen Wellendichtring weiterzubilden, wobei der Umweltschutz verbessert sein soll.

Erfindungsgemäß wird die Aufgabe bei der Anordnung nach den in Anspruch 1 angegebenen Merkmalen gelöst.

Wichtige Merkmale der Erfindung bei der Anordnung zum Abdichten einer Welle mittels eines Wellendichtrings sind, dass die Anordnung ein Gehäuseteil aufweist, welches einen Dichtsitz aufweist, an welchem der Wellendichtring aufgenommen ist,
wobei ein Schutzelement vom Wellendichtring, insbesondere von plastisch und/oder elastisch verformtem elastischem Material des Wellendichtrings, formschlüssig gehalten ist,
insbesondere wobei das elastische Material ein Elastomer ist.

Von Vorteil ist dabei, dass der Umweltschutz verbessert ist, da die Sicherheit gegen Austreten von Öl aus dem Innenraum in die Umwelt verbessert ist. Denn durch das Schutzelement ist der Wellendichtring gegen äußere Einwirkungen verbessert geschützt und das Schutzelement ist vom Wellendichtring aufgenommen und daher ohne zusätzliche spezielle Teile oder Klebstoff mit dem Wellendichtring formschlüssig verbunden.

Da der Wellendichtring in den Dichtsitz eingeschoben werden muss und dieses Einschieben über das Drücken auf das Schutzelement bewirkt wird, ist kein Zusatzaufwand zur Fertigung notwendig. Erfindungsgemäß wird beim Eindrücken des Wellendichtrings in den Dichtsitz Material des Vorsprungs, also radial hervorstehendes Material, derart gequetscht, das es über den Außenrand des Schutzelements nach radial innen hervorgedrängt wird. Der hierdurch entstehende Hintergriff verbindet das Schutzelement formschlüssig mit dem Wellendichtring.

Wichtig ist dabei auch, dass der Außendurchmesser des vorzugsweise als Lochscheibe ausgeführten Schutzelements kleiner ist als der lichte Innendurchmesser des Dichtsitzes. Hierdurch ist ein genügend großer ringförmiger Raumbereich zwischen Dichtsitz und Schutzelement ausgebildet, durch den oder aus dem das plastisch und/oder elastisch hervorgedrängte Material heraustritt und dann nach radial innen hervorgedrängt wird.

Eine axial gerichtete Rückstellkraft ist dadurch vermeidbar, dass der Wellendichtring, insbesondere das Material genügend weit beabstandet ist von einer an den Dichtsitz angrenzenden Einführschräge. Auf diese Weise wird auf das Material vom Dichtsitz nur ein nach radial innen gerichteter Druck ausgeübt und elastisch verformtes Material erzeugt somit keine axial gerichtete Kraftkomponente, insbesondere keine Rückstellkraft.

Bei einer vorteilhaften Ausgestaltung ragt eine Welle durch den Wellendichtring hindurch, wobei eine Dichtlippe des Wellendichtrings die Welle berührt, insbesondere wobei eine Staublippe des Wellendichtrings die Welle berührt oder zwischen der Staublippe und der Welle ein Ringspalt vorhanden ist. Von Vorteil ist dabei, dass der Wellendichtring im Dichtsitz aufgenommen ist und zur Welle hin abdichtet.

Erfindungsgemäß ist das Schutzelement von Material eines beim Einstecken des Wellendichtrings in den Dichtsitz verformten, insbesondere plastisch oder elastisch verformten, Vorsprungs des Wellendichtrings formschlüssig gehalten. Von Vorteil ist dabei, dass eine einfache Herstellung ermöglicht ist und kein zusätzliches Teil zur Befestigung notwendig ist. Insbesondere ist auch keine Klebstoffverbindung zwischen dem Schutzelement und dem Wellendichtring notwendig.

Bei einer vorteilhaften Ausgestaltung ist vor dem Einstecken des Wellendichtrings in den Dichtsitz der Vorsprung am radial äußeren Umfang des Wellendichtrings nach radial außen hervorstehend ausgebildet. Von Vorteil ist dabei, dass der Wellendichtring nur mit einem Vorsprung, also einem radialen Aufmaß ausgeführt werden muss. Somit ist durch bloße Formgebung ein Befestigungsteil einsparbar und eine sichere formschlüssige Verbindung erreichbar. Auf diese Weise ist der Wellendichtring schützbar und somit das Austreten von Öl verhinderbar.

Bei einer vorteilhaften Ausgestaltung ist das Schutzelement von um den Außenrand des Schutzelements herumgequetschtem Material des Wellendichtrings formschlüssig gehalten ist. Von Vorteil ist dabei, dass beim Einstecken des Wellendichtrings über das Schutzelement gedrückt wird und dabei mit Hilfe des Dichtsitzes das Material um den Außenrand des Schutzelements herumgequetscht wird, so dass dieses Schutzelement formschlüssig verbunden wird.

Bei einer vorteilhaften Ausgestaltung ist das Schutzelement in einem Hintergriff des plastisch und/oder elastisch verformten, elastischen Materials des Wellendichtrings formschlüssig gehalten. Von Vorteil ist dabei, dass eine einfache und sichere Befestigung für das Schutzelement erreicht ist.

Bei einer vorteilhaften Ausgestaltung ist das Schutzelement als Lochscheibe ausgeführt,
insbesondere durch deren Loch die Welle hindurchragt. Von Vorteil ist dabei, dass der Wellendichtring gegen äußere Einwirkungen schützbar ist.

Bei einer vorteilhaften Ausgestaltung ist das Schutzelement aus einem Kunststoff, insbesondere PTFE, und/oder aus einem insbesondere mit einer Vergussmasse, einem Kunststoff oder einem Klebstoff versetztem Flies gefertigt. Von Vorteil ist dabei, dass ein stabiles dauerhaft wirksames Schutzelement verwendbar ist.

**Erfindungsgemäß** weist das Schutzelement eine Kunststofflochscheibe auf, auf deren dem Wellendichtring zugewandter und/oder abgewandter Seite ein Flies aufgeklebt ist. Von Vorteil ist dabei, dass die Kunststofflochscheibe dem Flies Halt gibt und das Flies zur Welle hin möglichst nahe noch Schutzwirkung gegen äußere Einwirkungen bewirkt.

**Erfindungsgemäß** ist das Schutzelement an seinem radial äußeren Randbereich zum Wellendichtring hin hervorgebogen, insbesondere vollständig in Umfangsrichtung umlaufend. Von Vorteil ist dabei, dass ein verbesserter Formschluss zwischen Schutzelement und Wellendichtring bewirkbar ist, indem das um den äußeren Rand des Wellendichtrings herumgequetschte Material einfacher und direkter um den Rand herumquetschbar ist. Denn vor dem Hervorbiegen des radial äußeren Randbereichs des Schutzelements überdeckt das als radial nach außen hervorragender Vorsprung ausgeformte elastische Material des Wellendichtrings denselben axialen Bereich wie das Schutzelement und nach dem Hervorbiegen wird das gequetschte Material hinter das Schutzelement gequetscht, also auch in denjenigen Raumbereich, welcher durch das Hervorbiegen frei geworden ist. Der Weg, welchen das gequetschte Material zurücklegen muss, ist also verkürzt.

Bei einer vorteilhaften Ausgestaltung weist der Wellendichtring eine Dichtlippe auf, welche zur Welle hin abdichtet,
insbesondere wobei der Wellendichtring eine Staublippe aufweist, welche zur Welle hin hervorsteht und/oder das Schutzelement berührt. Von Vorteil ist dabei, dass der mit Öl zumindest teilweise befüllte Innenraum eines Getriebes durch den Wellendichtring gegen die Umgebung abdichtbar ist.

Bei einer vorteilhaften Ausgestaltung ist das elastische Material des Wellendichtrings ein Elastomer und/oder ein Gummi. Von Vorteil ist dabei, dass eine einfache kostengünstige Herstellung durch Umspritzen eines metallischen Versteifungsrings ausführbar ist. Außerdem ist das elastische Material verformbar ist und dabei ein nach radial außen hervorragender Vorsprung beim Einstecken in den einen kleineren lichten Innendurchmesser als den Außendurchmesser des Vorsprungs aufweisenden Dichtsitz in axiale Richtung hinter das Schutzelement und nach radial innen hinter das Schutzelement gequetscht wird. Somit ist ein formschlüssiges Verbinden des Schutzelements bewirkt.

Bei einer vorteilhaften Ausgestaltung weist der Wellendichtring einen Versteifungsring auf, der vom elastischen Material des Wellendichtrings umspritzt ist. Von Vorteil ist dabei, dass eine einfache kostengünstige Herstellung bewirkbar ist.

Bei einer vorteilhaften Ausgestaltung ist am Gehäuseteil eine Einführschräge axial angrenzend an den Dichtsitz ausgebildet,
insbesondere wobei der von der Einführschräge überdeckte Radialabstandsbereich den vor dem einführen des Wellendichtrings in den Dichtsitz vom Vorsprung überdeckten Radialabstandsbereich umfasst. Von Vorteil ist dabei, dass ein Einführen in den Dichtsitz in einfacher Weise ermöglicht ist und der Vorsprung somit nicht abgeschnitten wird, sondern stetig verformt wird während des Einsteckens in den Dichtsitz.

Wichtige Merkmale bei dem Getriebe mit einer Anordnung sind, dass das Gehäuseteil einen zumindest teilweise mit Öl befüllten Innenraum aufweist, der mittels des Wellendichtrings zur Umgebung hin abgedichtet ist,
wobei die Welle drehfest mit einem Verzahnungsteil des Getriebes verbunden ist.

Von Vorteil ist dabei, dass eine kostengünstige und hoch effiziente Abdichtung bewirkbar ist.

Wichtige Merkmale bei dem Verfahren zum Herstellen einer Anordnung, insbesondere einer vorbeschriebenen Anordnung, sind, dass
in einem ersten Verfahrensschritt ein Schutzelement in einem Wellendichtring, insbesondere in einer an einem Wellendichtring ausgebildeten Vertiefung, aufgenommen wird,
insbesondere wobei das Schutzelement als Lochscheibe geformt ist und die Drehsymmetrieachse des Schutzelements koaxial zur Ringachse, insbesondere Drehsymmetrieachse, des Wellendichtrings ausgerichtet wird,
insbesondere wobei das Schutzelement näher an einer Staublippe des Wellendichtrings als an einer Dichtlippe des Wellendichtrings angeordnet ist,
wobei der Wellendichtring auf eine, insbesondere die, Welle aufgesteckt wird,
und dass in einem zweiten Verfahrensschritt der Wellendichtring mittels eines auf das Schutzelement drückenden Werkzeugs in einen Dichtsitz, insbesondere an einem Gehäuseteil, insbesondere Lagerflansch, ausgebildeten Dichtsitz, eingeschoben wird,
wobei ein am Wellendichtring radial hervorstehender Vorsprung des Wellendichtrings, insbesondere in Umfangsrichtung vollständig umlaufend ausgebildeter, radial hervorstehender Vorsprung des elastischen Materials des Wellendichtrings, derart elastisch und/oder plastisch verformt wird, dass ein das Schutzelement mit dem Wellendichtring formschlüssig verbindender Hintergriff gebildet wird,
insbesondere wobei der Dichtsitz als eine durch das Gehäuseteil durchgehende Bohrung ausgeführt ist. Von Vorteil ist dabei, dass der Vorsprung beim Eindrücken des Wellendichtrings um den radial äußeren Randbereich des Schutzelements herumgequetscht wird und somit das Schutzelement formschlüssig mit dem Wellendichtring verbunden ist.

Bei einer vorteilhaften Ausgestaltung ist der maximale Außendurchmesser des Vorsprungs größer als der lichte Durchmesser des Dichtsitzes,
insbesondere wobei der auf die Rotationssymmetrieachse des Wellendichtrings bezogene maximale Radialabstand des Vorsprungs größer ist als der auf die Rotationssymmetrieachse, insbesondere Bohrungsachse, des Dichtsitzes bezogene Radialabstand,
insbesondere wobei der von der Einführschräge überdeckte Radialabstandsbereich den vor dem Einführen des Wellendichtrings in den Dichtsitz vom Vorsprung überdeckten Radialabstandsbereich umfasst. Von Vorteil ist dabei, dass der Vorsprung nach radial innen weggedrückt wird und so verformt wird, dass das Schutzelement formschlüssig vom Wellendichtring gehalten wird.

Bei einer vorteilhaften Ausgestaltung überlappt der von Material des Hintergriffs überdeckte Radialabstandsbereich mit dem vom Schutzelement überdeckten Radialabstandsbereich oder ist davon umfasst,
wobei der von diesem Material überdeckte axiale Bereich beabstandet ist von dem von dem Versteifungsring, von der Staublippe und/oder von der Dichtlippe des Wellendichtrings überdeckten axialen Bereich,
wobei die axiale Richtung koaxial zur Richtung der Rotationssymmetrieachse, also Ringachse, des Wellendichtrings ausgerichtet ist und der Radialabstand sowie die Umfangsrichtung auf die Rotationssymmetrieachse des Wellendichtrings bezogen ist. Von Vorteil ist dabei, dass eine einfache Verbindung des Schutzelements bewirkbar ist und somit kein separates zusätzliches Teil notwendig ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe. Der Umfang der Erfindung wird letztlich durch die beigefügten Ansprüche definiert.

Die Erfindung wird nun anhand von schematischen Abbildungen näher erläutert:

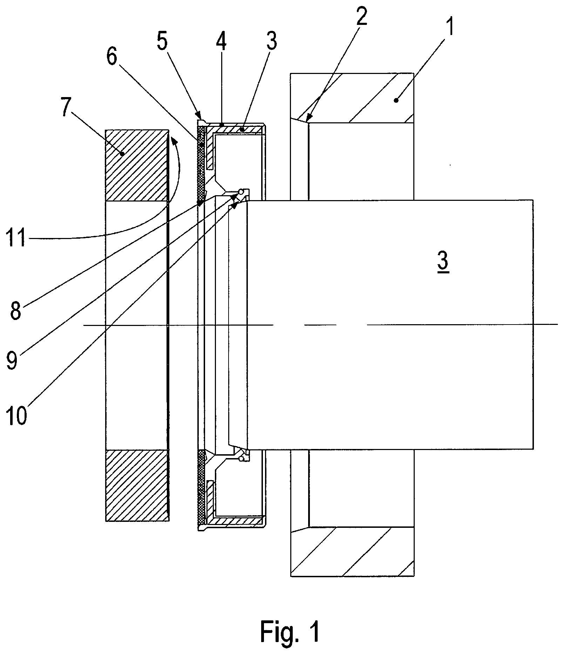

In der Figur 1 ist die Montage eines erfindungsgemäßen Wellendichtrings 4 vor dem Einführen in einen an einem Gehäuseteil 1 ausgebildeten Dichtsitz dargestellt.

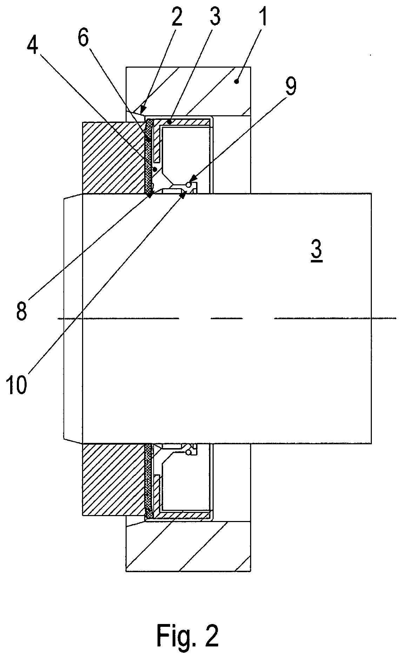

In der Figur 2 ist der in das Gehäuseteil eingeführte Wellendichtring 4 dargestellt.

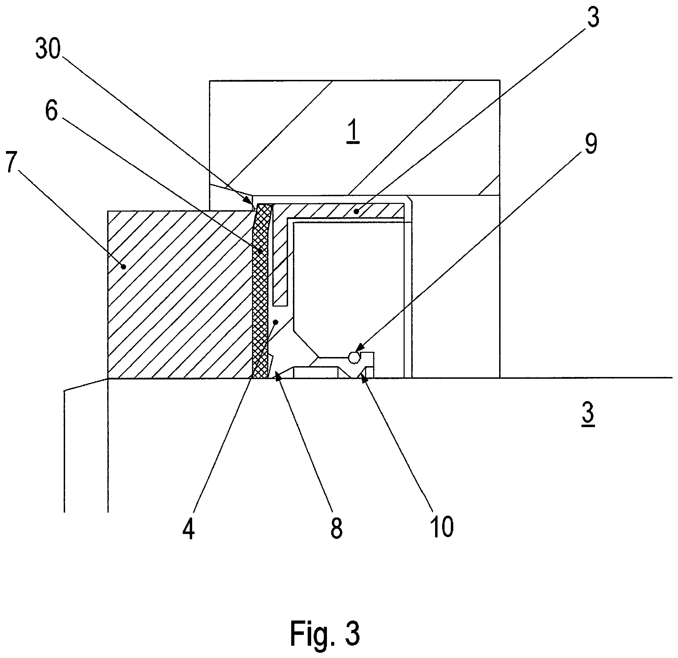

In der Figur 3 ist ein Ausschnitt der Figur 2 vergrößert dargestellt.

Wie in den Figuren dargestellt, weist der Wellendichtring 4 einen mit elastischem Material, insbesondere ein Elastomer, umspritzten Versteifungsring 3, insbesondere Stützring, und eine nach radial innen hervorragende Staublippe 8 und eine Dichtlippe 10 auf.

Als Elastomer ist ein Thermoplast oder ein anderer Kunststoff verwendbar.

Der Wellendichtring 4 wird auf eine Welle 3 aufgesteckt und mit einem Werkzeug 7, insbesondere Einpresswerkzeug, in eine als Dichtsitz ausgebildete Ausnehmung des Gehäuseteils 1 insbesondere eines Getriebes eingesteckt.

Die Ausnehmung ist axial durchgehend durch das Gehäuseteil 1 ausgebildet und weist an ihrem dem Werkzeug 7 zugewandten Endbereich eine Einführschräge 2 auf. Die Einsteckrichtung für den Wellendichtring 4 ist in axialer Richtung vorgesehen.

Die axiale Richtung ist parallel zur Drehachse der Welle 3 ausgerichtet. Die radiale Richtung und die Umfangsrichtung sind ebenfalls auf die Drehachse bezogen.

An seiner dem Innenraum insbesondere des Getriebes zugewandten Seite weist der Wellendichtring die Dichtlippe 10 auf, welche von einer Ringfeder 9 auf die Welle 3 aufgeschrumpft wird.

Auf seiner vom Innenraum axial abgewandten Seite weist der Wellendichtring 4 eine Staublippe 8 auf.

Zwischen dem Werkzeug 7 und dem Wellendichtring 4 ist ein Schutzelement 6, insbesondere Schutzscheibe, angeordnet. Vorzugsweise ist das Schutzelement 6 als Lochscheibe ausgeführt, welche auf die Welle 3 aufgesteckt ist.

Mittels des Werkzeugs 7 wird das Schutzelement 6 auf den Wellendichtring 4 gedrückt, der somit entlang der Welle 3 in den Dichtsitz eingeschoben wird. Die Einführschräge 2 erleichtert dabei die Ausrichtung des Wellendichtrings 4 zum Dichtsitz.

Das Werkzeug 7 selbst ist als Lochscheiben-artiger Stempel ausgeführt und weist an seinem radial äußeren Endbereich einen Vorsprung 11, insbesondere in Umfangsrichtung vollständig umlaufenden Vorsprung 11, auf. Mittels dieses Vorsprungs 11 drückt das Werkzeug 7 das Schutzelement 6 an seinem radial äußeren Bereich derart, dass dieser radial äußere Bereich des Schutzelements 6 in axialer Richtung vorgebogen wird und entsprechend tief in das elastische Material des Wellendichtrings 4 hineingedrückt wird. Auf diese Weise wird allerdings Material verdrängt und weicht zumindest teilweise nach radial außen am Wellendichtring 4 aus. Da jedoch der Dichtsitz das Material begrenzt wird Material entgegen der vom Werkzeug 7 ausgeführten Pressrichtung verformt, also in Richtung zum Werkzeug 7 hin. Sobald Material in den von der Einführschräge 2 in axialer Richtung überdeckten Bereich gelangt, quillt das Material nach radial außen hervor und auf der dem Werkzeug 7 zugewandten Seite des Schutzelements 6 nach radial innen.

Auf diese Weise ist das Schutzelement 6 formschlüssig im elastischen Material des Wellendichtrings 4 gehalten, insbesondere also durch den durch das plastisch und/oder elastisch verformte, elastische Material gebildeten Hinterschnitt.

Vor dem Einstecken in den Dichtsitz weist der Wellendichtring 4 an seinem dem Werkzeug zugewandten axialen Endbereich eine nach radial außen hervorstehende Erhebung 5, insbesondere Wulst, auf.

Der von dieser Erhebung 5 überdeckte axiale Bereich umfasst den von dem Schutzelement überdeckten axialen Bereich, insbesondere zu Beginn des Einsteckens des Wellendichtrings 4 in den Dichtsitz.

Vor dem Einstecken in den Dichtsitz weist der Wellendichtring 4 in dem von der Erhebung 5 überdeckten axialen Bereich einen Außendurchmesser auf, der größer ist als der lichte Innendurchmesser des Dichtsitzes, insbesondere aber kleiner als der größte lichte Innendurchmesser der Einführschräge 2.

Somit wird beim Einstecken des Wellendichtrings 4 in den Dichtsitz der Vorsprung 5 verformt, so dass Material axial in Richtung auf das Werkzeug 7 hin gequetscht wird und an der dem Werkzeug 7 zugewandten Seite des Schutzelements 6 nach radial innen ausweicht.

Auf diese Weise, insbesondere durch die plastische und/oder elastische Verformung, entsteht ein aus dem elastischen Material des Wellendichtrings 4 gebildeter Hinterschnitt, in welchem das Schutzelement 6 formschlüssig gehalten ist.

Die Bildung dieses Hinterschnitts, also des Ausweichens des Materials nach radial innen wird erheblich begünstigt durch das Vorbiegen des radial äußeren Randbereichs des Schutzelements zum Versteifungsring 3 hin aufgrund des Vorsprungs 11.

Vorzugsweise ist nach Entfernen des Werkzeugs 7 Material der ursprünglichen Erhebung 5 in dem von dem Schutzelement 5 überdeckten axialen Bereich nach radial innen gequetscht, so dass das Schutzelement 5 formschlüssig gehalten ist in dem elastischen Material des Wellendichtrings 4.

Der Wellendichtring 4 ist als Rotationskörper ausgeführt, der mathematisch gesehen durch Rotation eines U-förmigen Querschnitts und die Rotationsachse des Rotationskörpers entsteht. Die Erhebung 5 ist am radial äußeren Schenkel des U angeordnet und die Dichtlippe 10 sowie die Staublippe 8 am radial inneren Schenkel des U.

Im die beiden Schenkel des U verbindenden Joch des U ist ein erster Schenkel des L des L-förmigen Versteifungsrings 3 und im radial äußeren Schenkel des U ist der zweite Schenkel des L des L-förmigen Versteifungsrings 3 angeordnet.

Erfindungsgemäß ist also kein zusätzliches Teil notwendig, um das Schutzelement 6 zu befestigen, sondern es genügt die Umformung des elastischen Materials des Wellendichtrings. Unter Umformung wird hier die plastische und/oder elastische Verformung des elastischen Materials des Wellendichtrings verstanden.

Bei weiteren erfindungsgemäßen Ausführungsbeispielen wird der Wellendichtring 4 derart weit in den Dichtsitz eingeschoben, dass das umgeformte elastische Material, insbesondere des Vorsprungs 5 beabstandet ist von der Einführschräge 2. Vorteiligerweise ist somit aus der elastischen Verformung keine Rückstellkraft erzeugt, welche den Wellendichtring 4 aus dem Dichtsitz herausdrücken würde. Denn die elastische Rückstellkraft wirkt allenfalls auf den Dichtsitz, also nach radial außen, und erhöht somit die Haftreibung des Wellendichtrings in der Dichtung.

### Bezugszeichenliste

1 Gehäuseteil
2 Einführschräge
3 Versteifungsring, insbesondere Stützring
4 Wellendichtring
5 nach radial außen hervorstehende Erhebung, insbesondere Wulst
6 Schutzelement, insbesondere Schutzscheibe
7 Werkzeug, insbesondere Einpresswerkzeug
8 Staublippe
9 Ringfeder
10 Dichtlippe
11 Vorsprung
30 nach radial innen hervorragender Vorsprung

## Patentansprüche

1. Anordnung zum Abdichten einer Welle mittels eines Wellendichtrings (4),
wobei die Anordnung ein Gehäuseteil (1) aufweist, welches einen Dichtsitz aufweist, an welchem der Wellendichtring (4) aufgenommen ist,
wobei ein Schutzelement (6) vom Wellendichtring (4), insbesondere von plastisch und/oder elastisch verformtem elastischem Material des Wellendichtrings (4), formschlüssig gehalten ist,
wobei das Schutzelement (6) von Material eines beim Einstecken des Wellendichtrings (4) in den Dichtsitz verformten, insbesondere plastisch oder elastisch verformten, Vorsprungs (5)
des Wellendichtrings (4) formschlüssig gehalten ist,
**dadurch gekennzeichnet, dass**
das Schutzelement (6) eine Kunststofflochscheibe aufweist, auf deren dem Wellendichtring (4) zugewandten und/oder abgewandten Seite ein Flies aufgeklebt ist, wobei die Kunststofflochscheibe dem Flies Halt gibt und das Flies zur Welle hin möglichst nahe noch Schutzwirkung gegen äußere Einwirkungen bewirkt,
wobei das Schutzelement (6) an seinem radial äußeren Randbereich zum Wellendichtring (4) hin hervorgebogen ist, insbesondere vollständig in Umfangsrichtung umlaufend,
insbesondere zur Verkürzung des Weges, welchen das gequetschte Material zurücklegen muss.

2. Anordnung nach Anspruch 1,
**dadurch gekennzeichnet, dass**
eine Welle durch den Wellendichtring (4) hindurchragt,
wobei eine Dichtlippe (10) des Wellendichtrings (4) die Welle berührt,
insbesondere wobei eine Staublippe (8) des Wellendichtrings (4) die Welle berührt oder zwischen der Staublippe (8)und der Welle ein Ringspalt vorhanden ist.

3. Anordnung nach einem der vorangegangenen Ansprüche,
**dadurch gekennzeichnet, dass**
vor dem Einstecken des Wellendichtrings (4) in den Dichtsitz der Vorsprung (5) am radial äußeren Umfang des Wellendichtrings (4) nach radial außen hervorstehend ausgebildet ist.

4. Anordnung nach einem der vorangegangenen Ansprüche,
**dadurch gekennzeichnet, dass**
das Schutzelement (6) von um den Außenrand des Schutzelements (6) herumgequetschtem Material des Wellendichtrings (4) formschlüssig gehalten ist,
und/oder dass
das Schutzelement (6) in einem Hintergriff des plastisch und/oder elastisch verformten, elastischen Materials des Wellendichtrings (4) formschlüssig gehalten ist.

5. Anordnung nach einem der vorangegangenen Ansprüche, **dadurch gekennzeichnet, dass**
das Schutzelement (6) als Lochscheibe ausgeführt ist,
insbesondere durch deren Loch die Welle hindurchragt,
und/oder dass
das Schutzelement (6) aus einem Kunststoff, insbesondere PTFE, und/oder aus einem insbesondere mit einer Vergussmasse, einem Kunststoff oder einem Klebstoff versetztem Flies gefertigt ist.

6. Anordnung nach einem der vorangegangenen Ansprüche,
**dadurch gekennzeichnet, dass**
der Wellendichtring (4) eine Dichtlippe (10) aufweist, welche zur Welle hin abdichtet, insbesondere wobei der Wellendichtring (4) eine Staublippe (8)aufweist, welche zur Welle hin hervorsteht und/oder das Schutzelement (6) berührt.

7. Anordnung nach einem der vorangegangenen Ansprüche,
**dadurch gekennzeichnet, dass**
das elastische Material des Wellendichtrings (4) ein Elastomer und/oder ein Gummi ist,
und/oder dass
der Wellendichtring (4) einen Versteifungsring (3) aufweist, der vom elastischen Material des Wellendichtrings (4) umspritzt ist.

8. Anordnung nach einem der vorangegangenen Ansprüche,
**dadurch gekennzeichnet, dass**
am Gehäuseteil (1) eine Einführschräge (2) axial angrenzend an den Dichtsitz ausgebildet ist,
insbesondere wobei der von der Einführschräge (2) überdeckte Radialabstandsbereich den vor dem Einführen des Wellendichtrings (4) in den Dichtsitz vom Vorsprung (5) überdeckten Radialabstandsbereich umfasst.

9. Getriebe mit einer Anordnung nach einem der vorangegangenen Ansprüche,
**dadurch gekennzeichnet, dass**
das Gehäuseteil (1) einen zumindest teilweise mit Öl befüllten Innenraum aufweist, der mittels des Wellendichtrings (4) zur Umgebung hin abgedichtet ist,
wobei die Welle drehfest mit einem Verzahnungsteil des Getriebes verbunden ist.

10. Verfahren zum Herstellen einer Anordnung, insbesondere nach einem der vorangegangenen Ansprüche,
in einem ersten Verfahrensschritt ein Schutzelement (6) in einem Wellendichtring (4), insbesondere in einer an einem Wellendichtring (4) ausgebildeten Vertiefung, aufgenommen wird,
insbesondere wobei das Schutzelement (6) als Lochscheibe geformt ist und die Drehsymmetrieachse des Schutzelements (6) koaxial zur Ringachse, insbesondere Drehsymmetrieachse, des Wellendichtrings (4) ausgerichtet wird,
insbesondere wobei das Schutzelement (6) näher an einer Staublippe (8)des Wellendichtrings (4) als an einer Dichtlippe (10) des Wellendichtrings (4) angeordnet ist, wobei der Wellendichtring (4) auf eine, insbesondere die, Welle aufgesteckt wird,
**dadurch gekennzeichnet, dass**
in einem zweiten Verfahrensschritt der Wellendichtring (4) mittels eines auf das Schutzelement (6) drückenden Werkzeugs (7) in einen Dichtsitz, insbesondere an einem Gehäuseteil (1), insbesondere Lagerflansch, ausgebildeten Dichtsitz, eingeschoben wird,
wobei ein am Wellendichtring (4) radial hervorstehender Vorsprung (5) des Wellendichtrings (4), insbesondere in Umfangsrichtung vollständig umlaufend ausgebildeter, radial hervorstehender Vorsprung (5) des elastischen Materials des Wellendichtrings (4), derart elastisch und/oder plastisch verformt wird, dass ein das Schutzelement (6) mit dem Wellendichtring (4) formschlüssig verbindender Hintergriff gebildet wird,
insbesondere wobei der Dichtsitz als eine durch das Gehäuseteil (1) durchgehende Bohrung ausgeführt ist,
wobei das Schutzelement (6) eine Kunststofflochscheibe aufweist, auf deren dem Wellendichtring (4) zugewandten und/oder abgewandten Seite ein Flies aufgeklebt ist, wobei die Kunststofflochscheibe dem Flies Halt gibt und das Flies zur Welle hin möglichst nahe noch Schutzwirkung gegen äußere Einwirkungen bewirkt,
wobei das Schutzelement (6) an seinem radial äußeren Randbereich zum Wellendichtring (4) hin hervorgebogen ist, insbesondere vollständig in Umfangsrichtung umlaufend,
insbesondere zur Verkürzung des Weges, welchen das gequetschte Material zurücklegen muss.

11. Verfahren nach Anspruch 10,
**dadurch gekennzeichnet, dass**
der maximale Außendurchmesser des Vorsprungs (11) größer als der lichte Durchmesser des Dichtsitzes,
insbesondere wobei der auf die Rotationssymmetrieachse des Wellendichtrings (4) bezogene maximale Radialabstand des Vorsprungs (11) größer ist als der auf die Rotationssymmetrieachse, insbesondere Bohrungsachse, des Dichtsitzes bezogene Radialabstand,
insbesondere wobei der von der Einführschräge (2) überdeckte Radialabstandsbereich den vor dem einführen des Wellendichtrings (4) in den Dichtsitz vom Vorsprung (11) überdeckten Radialabstandsbereich umfasst,
und/oder dass
der von Material des Hintergriffs überdeckte Radialabstandsbereich überlappt mit dem vom Schutzelement (6) überdeckten Radialabstandsbereich oder davon umfasst ist,
wobei der von diesem Material überdeckte axiale Bereich beabstandet ist von dem von dem Versteifungsring (3), von der Staublippe (8) und/oder von der Dichtlippe (10) des Wellendichtrings (4) überdeckten axialen Bereich,
wobei die axiale Richtung koaxial zur Richtung der Rotationssymmetrieachse, also Ringachse, des Wellendichtrings (4) ausgerichtet ist und der Radialabstand sowie die Umfangsrichtung auf die Rotationssymmetrieachse des Wellendichtrings (4) bezogen ist.

## Claims

1. An arrangement for sealing a shaft by means of a shaft sealing ring (4),
wherein the arrangement has a housing part (1) which has a seal seat at which the shaft sealing ring (4) is received,
wherein a protective element (6) is held in a form form-locked manner by the shaft sealing ring (4), in particular by plastically and/or elastically deformed, elastic material of the shaft sealing ring (4),
wherein the protective element (6) is held in a form-locked manner by material of a projection (5) of the shaft sealing ring (4), which projection is deformed upon insertion of the shaft sealing ring (4) into the shaft seat, in particular plastically or elastically deformed,
**characterised in that**
the protective element (6) has a plastics perforated disc on whose side facing and/or remote from the shaft sealing ring (4) there is stuck a non-woven material, wherein the plastics perforated disc provides support for the non-woven fabric and the non-woven fabric, as close as possible to the shaft, still brings about a protective effect against external influences,
wherein the protective element (6) is, at its radially outer edge region, bent towards the shaft sealing ring (4), in particular in a manner completely encircling in a circumferential direction,
in particular to shorten the path which the squeezed material has to cover.

2. An arrangement according to claim 1,
**characterised in that**
a shaft projects through the shaft sealing ring (4),
wherein a sealing lip (10) of the shaft sealing ring (4) contacts the shaft,
in particular wherein a dust lip (8) of the shaft sealing ring (4) contacts the shaft or an annular gap is present between the dust lip (8) and the shaft.

3. An arrangement according to any one of the preceding claims,
**characterised in that**
the projection (5) projects radially outwards at the radially outer circumference of the shaft sealing ring (4) before insertion of the shaft sealing ring (4) into the seal seat.

4. An arrangement according to any one of the preceding claims,
**characterised in that**
the protective element (6) is held in a form-locked manner by material, squeezed around the outer edge of the protective element (6), of the shaft sealing ring (4),
and/or **in that**
the protective element (6) is held in a form-locked manner in a rear grip of the plastically and/or elastically deformed, elastic material of the shaft sealing ring (4).

5. An arrangement according to any one of the preceding claims,
**characterised in that**
the protective element (6) is in the form of a perforated disc,
in particular through the hole of which there projects the shaft,
and/or **in that**
the protective element (6) is manufactured from a plastics material, in particular PTFE, and/or from a non-woven material which is in particular treated with a sealing compound, a plastics material or an adhesive.

6. An arrangement according to any one of the preceding claims,
**characterised in that**
the shaft sealing ring (4) has a sealing lip (10) which seals towards the shaft,
in particular wherein the shaft sealing ring (4) has a dust lip (8) which projects towards the shaft and/or contacts the protective element (6).

7. An arrangement according to any one of the preceding claims,
**characterised in that**
the elastic material of the shaft sealing ring (4) is an elastomer and/or a rubber,
and/or **in that**
the shaft sealing ring (4) has a stiffening ring (3) which is overmoulded by the elastic material of the shaft sealing ring (4).

8. An arrangement according to any one of the preceding claims,
**characterised in that**
a lead-in slope (2) is formed at the housing part (1) in a manner axially adjacent to the seal seat,
in particular wherein the radial distance region covered by the lead-in slope (2) comprises the radial distance region covered by the projection (5) before the insertion of the shaft sealing ring (4) into the seal seat.

9. A gear unit having an arrangement according to any one of the preceding claims,
**characterised in that**
the housing part (1) has an interior at least partially filled with oil, which interior is sealed towards the surroundings by means of the shaft sealing ring (4),
wherein the shaft is connected to a toothing part of the gear unit in a rotationally-fixed manner.

10. A method of producing an arrangement, in particular according to any one of the preceding claims,
in a first method step, a protective element (6) is received in a shaft sealing ring (4), in particular in a recess formed at a shaft sealing ring (4),
in particular wherein the protective element (6) is formed as a perforated disc and the axis of rotational symmetry of the protective element (6) is oriented coaxially with the ring axis, in particular axis of rotational symmetry, of the shaft sealing ring (4),
in particular wherein the protective element (6) is arranged closer to a dust lip (8) of the shaft sealing ring (4) than to a sealing lip (10) of the shaft sealing ring (4), wherein the shaft sealing ring (4) is placed onto a shaft, in particular the shaft, **characterised in that**
in a second method step, the shaft sealing ring (4) is pushed into a seal seat, in particular a seal seat formed on a housing part (1), in particular bearing flange, by means of a tool (7) pressing onto the protective element (6),
wherein a projection (5), projecting radially at the shaft sealing ring (4), of the shaft sealing ring (4), in particular a circumferentially completely encircling, radially projecting projection (5) of the elastic material of the shaft sealing ring (4), is elastically and/or plastically deformed in such a manner that there is formed a rear grip connecting the protective element (6) to the shaft sealing ring (4) in a form-locked manner,
in particular wherein the seal seat is in the form of a bore passing through the housing part (1),
wherein the protective element (6) has a plastics perforated disc on whose side facing and/or remote from the shaft sealing ring (4) there is stuck a non-woven material,
wherein the plastics perforated disc provides support for the non-woven fabric and the non-woven fabric, as close as possible to the shaft, still brings about a protective effect against external influences,
wherein the protective element (6) is, at its radially outer edge region, bent towards the shaft sealing ring (4), in particular in a manner completely encircling in a circumferential direction,
in particular to shorten the path which the squeezed material has to cover.

11. A method according to claim 10,
**characterised in that**
the maximum external diameter of the projection (11) is greater than the inside diameter of the seal seat,
in particular wherein the maximum radial distance, related to the axis of rotational symmetry of the shaft sealing ring (4), of the projection (11) is greater than the radial distance, related to the axis of rotational symmetry, in particular bore axis, of the seal seat,
in particular wherein the radial distance region covered by the lead-in slope (2) comprises the radial distance region covered by the projection (11) before the insertion of the shaft sealing ring (4) into the seal seat,
and/or **in that**
the radial distance region covered by material of the rear grip overlaps with the radial distance region covered by the protective element (6) or is encompassed therein,
wherein the axial region covered by this material is spaced apart from the axial region covered by the stiffening ring (3), by the dust lip (8) and/ or by the sealing lip (10) of the shaft sealing ring (4),
wherein the axial direction is oriented coaxially with the direction of the axis of rotational symmetry, therefore ring axis, of the shaft sealing ring (4) and the radial distance and the circumferential direction is related to the axis of rotational symmetry of the shaft sealing ring (4).

## Revendications

1. Agencement permettant de rendre étanche un arbre au moyen d'une bague d'étanchéité d'arbre (4), le dispositif présentant une partie carter (1) qui présente un siège d'étanchéité au niveau duquel est accueillie la bague d'étanchéité d'arbre (4),
un élément de protection (6) étant retenu avec verrouillage par complémentarité de forme par la bague d'étanchéité d'arbre (4), en particulier par un matériau élastique déformé plastiquement et/ou élastiquement de la bague d'étanchéité d'arbre (4),
l'élément de protection (6) étant retenu avec verrouillage par complémentarité de forme par le matériau d'une saillie (5) de la bague d'étanchéité d'arbre (4), ladite saillie étant déformée, en particulier déformée de manière plastique ou élastique, lors de l'insertion de la bague d'étanchéité d'arbre (4) dans le siège d'étanchéité,
**caractérisé en ce que**
l'élément de protection (6) présente un disque perforé en plastique sur le côté opposé à la bague d'étanchéité d'arbre (4), et/ou tourné vers celle-ci, duquel est collé un non-tissé,
le disque perforé en plastique retenant le non-tissé, et le non-tissé assurant une protection supplémentaire contre les influences extérieures aussi près que possible de l'arbre, l'élément de protection (6) étant replié vers la bague d'étanchéité d'arbre (4) au niveau de sa région de bord radialement extérieure, en particulier de manière à s'étendre en totalité dans la direction circonférentielle,
en particulier afin de raccourcir la distance que le matériau écrasé doit parcourir.

2. Agencement selon la revendication 1,
**caractérisé en ce que**
un arbre traverse la bague d'étanchéité d'arbre (4),
une lèvre d'étanchéité (10) de la bague d'étanchéité d'arbre (4) étant en contact avec l'arbre,
une lèvre antipoussière (8) de la bague d'étanchéité d'arbre (4) étant en particulier en contact avec l'arbre, ou un espace annulaire étant présent entre la lèvre antipoussière (8) et l'arbre.

3. Agencement selon l'une quelconque des revendications précédentes,
**caractérisé en ce que**
avant l'insertion de la bague d'étanchéité d'arbre (4) dans le siège d'étanchéité, la saillie (5) est formée au niveau de la périphérie extérieure radiale de la bague d'étanchéité d'arbre (4) de manière à être en saillie radialement vers l'extérieur.

4. Agencement selon l'une quelconque des revendications précédentes,
**caractérisé en ce que**
l'élément de protection (6) est retenu avec verrouillage par complémentarité de forme par le matériau de la bague d'étanchéité d'arbre (4) écrasé autour du bord extérieur de l'élément de protection (6),
et/ou **en ce que**
l'élément de protection (6) est retenu avec verrouillage par complémentarité de forme par une prise arrière du matériau élastique, pouvant être déformé de manière plastique ou élastique, de la bague d'étanchéité d'arbre (4).

5. Agencement selon l'une quelconque des revendications précédentes,
**caractérisé en ce que**
l'élément de protection (6) est réalisé sous la forme d'un disque perforé,
en particulier dont le trou est traversé par l'arbre,
et/ou **en ce que**
l'élément de protection (6) est fabriqué à partir d'une matière plastique, en particulier du PTFE, et/ou à partir d'un non-tissé mélangé en particulier avec une masse de scellement, une matière plastique ou un adhésif.

6. Agencement selon l'une quelconque des revendications précédentes,
**caractérisé en ce que**
la bague d'étanchéité d'arbre (4) présente une lèvre d'étanchéité (10) qui assure l'étanchéité vers l'arbre,
la bague d'étanchéité d'arbre (4) présentant en particulier une lèvre antipoussière (8) qui fait saillie vers l'arbre et/ou qui est en contact avec l'élément de protection (6).

7. Agencement selon l'une quelconque des revendications précédentes,
**caractérisé en ce que**
le matériau élastique de la bague d'étanchéité d'arbre (4) est un élastomère et/ou un caoutchouc, et/ou **en ce que**
la bague d'étanchéité d'arbre (4) présente une bague de renfort (3) qui est surmoulée par du matériau élastique de la bague d'étanchéité d'arbre (4).

8. Agencement selon l'une quelconque des revendications précédentes,
**caractérisé en ce que**
une rampe d'introduction (2) est réalisée sur la partie carter (1) de manière axialement adjacente au siège d'étanchéité,
la région d'espacement radial recouverte par la rampe d'introduction (2) comprenant en particulier la région d'espacement radial recouverte par la saillie (5) avant l'introduction de la bague d'étanchéité d'arbre (4) dans le siège d'étanchéité.

9. Engrenage comprenant un agencement selon l'une quelconque des revendications précédentes,
**caractérisé en ce que**
la partie carter (1) présente un espace intérieur au moins partiellement rempli d'huile et rendu étanche vis-à-vis de l'environnement au moyen de la bague d'étanchéité d'arbre (4),
l'arbre étant relié de manière solidaire en rotation à une partie dentée de l'engrenage.

10. Procédé de fabrication d'un agencement selon l'une quelconque des revendications précédentes,
dans une première étape de procédé, un élément de protection (6) est accueilli dans une bague d'étanchéité d'arbre (4), en particulier dans un renfoncement réalisé au niveau d'une bague d'étanchéité d'arbre (4),
l'élément de protection (6) présentant en particulier la forme d'un disque perforé et l'axe de symétrie de rotation de l'élément de protection (6) étant orienté coaxialement par rapport à l'axe de bague, en particulier à l'axe de symétrie de rotation, de la bague d'étanchéité d'arbre (4),
l'élément de protection (6) étant en particulier agencé plus près d'une lèvre antipoussière (8) de la bague d'étanchéité d'arbre (4) que d'une lèvre d'étanchéité (10) de la bague d'étanchéité d'arbre (4), la bague d'étanchéité d'arbre (4) étant enfichée sur un arbre, en particulier sur l'arbre,
**caractérisé en ce que**
dans une deuxième étape de procédé, la bague d'étanchéité d'arbre (4) est insérée, au moyen d'un outil (7) appuyant sur l'élément de protection (6), dans un siège d'étanchéité, en particulier un siège d'étanchéité réalisé au niveau d'une partie carter (1), en particulier d'une bride de montage,
une saillie (5) de la bague d'étanchéité d'arbre (4), en saillie radiale au niveau de la bague d'étanchéité d'arbre (4), en particulier une saillie (5) du matériau élastique de la bague d'étanchéité d'arbre (4) en saillie radiale et réalisée de manière à s'étendre en totalité dans la direction circonférentielle, étant déformée de manière élastique et/ou plastique de manière à former une prise arrière reliant avec verrouillage par complémentarité de forme l'élément de protection (6) à la bague d'étanchéité d'arbre (4),
le siège d'étanchéité étant en particulier mis en œuvre sous la forme d'un alésage traversant la partie carter (1),
l'élément de protection (6) présentant un disque perforé en plastique sur le côté opposé à la bague d'étanchéité d'arbre (4), et/ou tourné vers celle-ci, duquel est collé un non-tissé,
dans lequel le disque perforé en plastique retient le non-tissé, et le non-tissé assurant une protection supplémentaire contre les influences extérieures aussi près que possible de l'arbre,
l'élément de protection (6) étant replié vers la bague d'étanchéité d'arbre (4) au niveau de sa région de bord radialement extérieure, en particulier de manière à s'étendre en totalité dans la direction circonférentielle,
en particulier afin de raccourcir la distance que le matériau écrasé doit parcourir.

11. Procédé selon la revendication 10,
**caractérisé en ce que**
le diamètre extérieur maximal de la saillie (11) est supérieur au diamètre intérieur du siège d'étanchéité,
la distance radiale maximale de la saillie (11) par rapport à l'axe de symétrie de rotation de la bague d'étanchéité d'arbre (4) étant en particulier supérieure à la distance radiale par rapport à l'axe de symétrie de rotation, en particulier à l'axe d'alésage, du siège d'étanchéité,
la région d'espacement radial recouverte par la rampe d'introduction (2) comprenant en particulier la région d'espacement radial recouverte par la saillie (11) avant l'introduction de la bague d'étanchéité d'arbre (4) dans le siège d'étanchéité,
et/ou **en ce que**
la région d'espacement radial recouverte par le matériau de la prise arrière chevauche la région d'espacement radial recouverte par l'élément de protection (6) ou est comprise dans celle-ci,
la région axiale recouverte par ledit matériau étant espacée par rapport à la région axiale recouverte par la bague de renfort (3), par la lèvre antipoussière (8) et/ou par la lèvre d'étanchéité (10) de la bague d'étanchéité d'arbre (4),
la direction axiale étant orientée coaxialement par rapport à la direction de l'axe de symétrie de rotation, c'est-à-dire à l'axe de bague, de la bague d'étanchéité d'arbre (4) et la distance radiale ainsi que la direction circonférentielle étant liées à l'axe de symétrie de rotation de la bague d'étanchéité d'arbre (4).
